# FASCICULE DE BREVET EUROPEEN

(11) **EP 2 443 183 B1**
(45) Date de publication et mention de la délivrance du brevet: **07.01.2015**
(21) Numéro de dépôt: 10738011.5
(22) Date de dépôt: 15.06.2010
(51) Int. Cl.: C08J 3/22, C08J 3/24, C08K 5/14, C08L 23/08, C08L 31/04

(54) **COMPOSITION MELANGE-MAITRE COMPRENANT UN PEROXYDE**
MASTERMISCHUNGSZUSAMMENSETZUNG MIT EINEM PEROXIOD
MASTER MIXTURE COMPOSITION INCLUDING A PEROXIDE

(30) Priorité: 15.06.2009 FR 0953978
(43) Date de publication de la demande: 25.04.2012
(73) Titulaire: Arkema France, 92700 Colombes (FR)
(72) Inventeur: LAIGNEL, Anne-Yvonne, F-27270 La Chapelle Gautier (FR); CORFIAS-ZUCCALLI, Catherine, F-27500 Pont-Audemer (FR); KEROMNES, Laurent, F-69630 CHAPONOST (FR)
(86) Numéro de dépôt international: PCT/FR2010/051188
(87) Numéro de publication internationale: WO 2010/146300

(56) Documents cités:
- DE-A1- 3 049 272
- US-A- 4 342 844

## Description

### Domaine de l'invention

L'invention a pour objet une composition thermoplastique comprenant un peroxyde organique, son procédé de fabrication et l'utilisation de cette composition pour réticuler des polymères.

### Etat de l'art

Les peroxydes organiques sont couramment utilisés pour la réticulation des résines thermoplastiques ou des élastomères, ces résines et élastomères étant regroupés dans la présente description sous le terme « polymères ». Pour réticuler un polymère, un peroxyde est généralement mélangé au polymère à réticuler dans une première étape, puis on réalise une seconde étape de mise en forme du polymère et une troisième étape de réticulation, par exemple par un traitement thermique.

A température ambiante, les peroxydes peuvent être sous forme liquide ou solide. Lorsque les peroxydes sont mélangés à ces polymères, ils sont mélangés à haute température, c'est-à-dire une température supérieure au point de ramollissement du polymère, par exemple par extrusion ou malaxage ; les peroxydes sont alors généralement sous une forme liquide.

Un premier problème est que les peroxydes sous cette forme liquide sont difficiles à mélanger avec le polymère et on peut observer un phénomène de démixtion du peroxyde.

De plus, une longue durée de mélange à haute température est nécessaire afin de permettre le mélange du peroxyde dans le polymère. On peut alors observer un phénomène de réticulation dès cette étape, c'est-à-dire une réticulation prématurée du polymère avant sa mise en forme. Pour limiter ces problèmes, on peut incorporer à température ambiante le peroxyde sous forme liquide préalablement dans des charges poreuses tels que la silice ou le talc. Cependant, lorsque ces charges poreuses portant le peroxyde sont mélangées avec le polymère, elles sont difficiles à répartir uniformément et rapidement dans le polymère ; l'utilisation de ces charges poreuses peut également diminuer certaines propriétés du polymère, comme par exemple sa transparence.

Afin de faciliter le mélange des peroxydes avec le polymère à réticuler, on peut également utiliser des compositions comprenant un polymère additionnel et des peroxydes en concentration élevée, bien connues de l'homme du métier sous le nom de « mélange-maître » (en anglais « master batch »).

Le brevet US 5,589,526 décrit par exemple un mélange-maître comprenant un polymère élastomérique tel que le copolymère d'éthylène et d'acétate de vinyle, de 30 à 50% en masse de la composition d'un peroxyde organique, un plastifiant, un polyocténamère ainsi que des charges. Le mélange-maître décrit est fabriqué par un mélangeur pour les thermoplastiques en faisant fondre les polymères avec le plastifiant et en ajoutant le peroxyde puis les charges. Le procédé de fabrication est long et complexe : comme on observe un phénomène d'auto échauffement de la composition lorsque l'on utilise ce type de mise en oeuvre à l'état fondu, il faut donc vérifier que la température reste stable et soit suffisamment faible pour qu'il n'y ait pas de réticulation prématurée. De plus, la présence de plastifiant est obligatoire afin de réduire l'auto échauffement, ce qui peut être gênant pour certaines applications. Enfin, la présence de charges en grandes quantités, telles que la craie et l'acide silicique, et le polyocténamère qui est un polymère très cristallin rendent le mélange-maître opaque.

Dans le brevet US 3,594,342 est décrit un procédé de fabrication de polyéthylène réticulé dans lequel on mélange un oligomère d'un copolymère d'éthylène et d'acétate de vinyle ou d'un copolymère d'éthylène et d'ester acrylique, ayant un faible taux d'acétate ou d'ester acrylique, avec un peroxyde pour former un mélange-maître, qui est ensuite mélangé à un polyéthylène à l'état fondu. Le mélange-maître est fabriqué à l'état fondu et des problèmes de réticulation prématurée peuvent apparaître.

Le document DE 3049272 A1 décrit des mélanges-maîtres comprenant des peroxydes organiques, ces mélanges-maîtres étant utiles pour la fabrication d'élastomères thermoplastiques partiellement réticulés. Ces élastomères sont particulièrement utiles pour la fabrication de pièces automobiles, électriques ou encore de chaussures. Ce mélange-maître comprend un copolymère d'oléfines tel qu'un copolymère éthylène-propylène et une résine polyoléfine ayant une forte cristallinité. Ce mélange-maître est fabriqué en mettant en suspension les granulés dans une solution aqueuse. Parmi les exemples, l'exemple 4 décrit un mélange-maître comprenant principalement un copolymère éthylène-propylène et en plus faibles proportions un copolymère éthylène-acétate de vinyle qui comprend 20% en poids d'acétate de vinyle. Ce mélange-maître n'est pas transparent. Par ailleurs, malgré le séchage, des quantités relativement importantes d'eau peuvent être présentes dans le mélange-maître.

Le brevet US 4,342,844 décrit un procédé de fabrication d'un mélange-maître comprenant de 20 à 60% en masse de peroxydes. Il comprend une première étape de mise en contact de particules de polymère de tout type à une température de 15 à 95°C avec un peroxyde organique sous forme liquide ou avec une émulsion instable de peroxyde et d'un solvant pour incorporer le peroxyde dans les particules, ces particules de polymère étant complètement entouré du milieu liquide après mise en contact, les particules étant séparées du milieu liquide dans une seconde étape.

Ce procédé de fabrication permet de limiter le phénomène de réticulation prématurée. Cependant, il présente l'inconvénient de devoir séparer les particules du milieu liquide et de devoir sécher lesdites particules, ce qui rallonge le procédé de fabrication du mélange-maître. Les exemples 8 et 9 décrivent des mélanges-maîtres fabriqués à partir de copolymère d'éthylène et d'acétate de vinyle comprenant un faible taux massique d'acétate de vinyle, bien inférieur à 20% en masse. La quantité de peroxyde dans le mélange-maître ainsi obtenu est de l'ordre de 40% en masse. Par ailleurs, malgré le séchage, des quantités relativement importantes d'eau peuvent être présentes dans le mélange-maître. Le mélange-maître obtenu est peu transparent. Par ailleurs, aucune indication de transparence des polymères réticulés par ces mélanges-maîtres n'est indiquée.

Il existe donc un besoin de trouver de nouveaux mélange-maîtres transparents, aisément manipulables et stockables, qui permettent de réticuler des polymères tout en conservant la transparence de ces polymères. Il est aussi nécessaire de trouver un procédé avantageux de fabrication de mélanges-maîtres dans lesquels le phénomène de réticulation prématuré est limité et qui peut être fabriqué par un nouveau procédé de fabrication aisé.

### Résumé de l'invention

Un objet préféré de l'invention est une composition (I) transparente obtenue par un procédé selon l'une des revendications précédentes, comprenant un copolymère d'éthylène et d'un monomère éthylénique portant une fonction polaire (a) et un peroxyde (b) choisi parmi la famille des peroxyesters, caractérisée en ce que ladite composition comprend en masse :
- de 5% à 30% de (b) ;
- de 70% à 95% de (a) ;
et en ce que le copolymère (a) comprend de 20% à 45% en masse de monomère éthylénique portant une fonction polaire.

La composition (I) selon l'invention peut être utilisée pour la réticulation d'un polymère. Elle présente en particulier l'avantage d'être plus transparente que les mélanges-maîtres de l'art antérieur (décrits par exemples dans les documents DE 3049272 A1, US 5589526 et US 4342844). De ce fait, elle est très utile pour la réticulation de polymères transparents.

Avantageusement, la masse moléculaire en poids est comprise dans la gamme allant de 10000 à 100000 g/mol, préférentiellement de 20000 à 65000 g/mol, tout préférentiellement de 25000 à 50000 g/mol.

La mesure de la masse moléculaire en poids peut être déterminée par Chromatographie en Phase Gaz (GPC), à 145°C, en mettant le polymère dans le trichlorobenzène à une concentration de 1g/L et en utilisant la méthode MARK-HOUWINK pour le calcul des masses molaires équivalentes (étalonnage PS).

Préférentiellement, le monomère éthylénique portant une fonction polaire comprend de 3 à 20 atomes de carbone, préférentiellement de 4 à 8 atomes.

Avantageusement, le monomère éthylénique portant une fonction polaire est choisi parmi les esters vinyliques d'acide carboxylique saturé, les acides carboxyliques insaturés ou les esters (méth)acryliques d'acide carboxylique insaturé.

Avantageusement, on utilise cette composition pour la fabrication de pièces ou de films de polymères réticulés transparents. A titre d'exemple, ces polymères transparents réticulés sont utiles pour la fabrication de verre feuilleté ou dans les panneaux photovoltaïques pour enrober les capteurs photovoltaïques.

Le polymère transparent réticulé par la composition peut être choisi parmi les copolymères d'éthylène et d'un monomère éthylénique portant une fonction polaire, ledit monomère éthylénique étant préférentiellement choisi parmi les esters vinyliques d'acide carboxylique saturé, les acides carboxyliques insaturés ou les esters (méth)acryliques d'acide carboxylique insaturé. Préférentiellement, le monomère éthylénique peut être choisi parmi l'acétate de vinyle et les (méth)acrylates de méthyle, d'éthyle ou de butyle.

La composition peut être fabriquée par les procédés de fabrication connus de l'homme du métier, préférentiellement par absorption du peroxyde (b) dans le copolymère (a) et en particulier, celle-ci est susceptible d'être obtenue par le procédé ci-après.

L'invention porte également sur un procédé de fabrication d'une composition thermoplastique (I) comprenant :
▪ un copolymère (a) d'éthylène et d'un monomère éthylénique portant une fonction polaire sous forme de particules ;
▪ et au moins une solution (b) de peroxyde organique, avec éventuellement un solvant organique de celui-ci, ledit peroxyde étant choisi parmi la famille des peroxyesters, qui est absorbé par ledit copolymère ;
caractérisé en ce qu'il comprend :
▪ une première étape de mise en contact du peroxyde (b) avec le copolymère (a) ;
▪ une seconde étape d'absorption totale de la solution de peroxyde (b) par le copolymère (a) sous agitation ;
▪ une troisième étape de récupération de la composition thermoplastique (I).

Un avantage de ce procédé est que le phénomène de réticulation prématuré de la composition thermoplastique est limité et que le procédé de fabrication est simple.

Selon un mode avantageux, la température de la seconde étape du procédé est inférieure à la température de ramollissement du copolymère, qui est mesuré dans la présente demande par la méthode est décrite dans la norme ASTM E 28-99(2004), mieux connue sous le nom « Ring and Ball ».

Selon un premier mode avantageux, le copolymère est sous forme de particules ayant un volume moyen de 1 à 1000 mm³, préférentiellement de 3 à 120 mm³.

Dans ce cas, on obtient directement la composition sous forme de particules sans avoir besoin de reformer des particules. Il peut alors facilement être utilisé comme mélange-maître. En utilisant des particules ayant ce volume particulier, l'absorption du peroxyde par le copolymère est excellente et on observe peu d'agglomération entre les particules.

Le copolymère utile dans le procédé en trois étapes peut comprendre de 10 à 60% en masse de monomère éthylénique portant une fonction polaire par rapport à la masse totale du copolymère, avantageusement de 20 à 45%, tout préférentiellement de 25 à 35%.

L'absorption du peroxyde est améliorée lorsque le copolymère comprend cette gamme de monomère éthylénique.

La quantité massique de solution de peroxyde (b) comprise dans la composition peut être comprise dans la gamme allant de 5 à 30%. Selon un mode, la quantité massique de peroxyde comprise dans la composition est comprise dans la gamme allant de 7 à 16%.

Selon une version de l'invention, il existe plusieurs mises en contact ou une mise en contact continue de la solution de peroxyde (b) avec le copolymère (a), c'est-à-dire qu'il y a plusieurs injections ou une injection continue de la solution de peroxyde (b) lors du procédé.

### Description détaillée de l'invention

La composition (I) fabriquée par le procédé selon l'invention comprend un copolymère (a) et une solution de peroxyde organique (b).

Le copolymère (a) est un copolymère d'éthylène et d'un monomère éthylénique portant une fonction polaire.

On entend par monomère éthylénique, un monomère comprenant une insaturation susceptible de réagir avec l'éthylène dans un procédé par voie radicalaire.

Par fonction polaire, on entend une fonction présentant un moment dipolaire, tel que les fonctions amine, alcool, uréthane, acide ou ester. Préférentiellement, la fonction polaire est une fonction acide ou une fonction ester.

Le monomère éthylénique portant une fonction polaire comprend préférentiellement de 3 à 20 atomes de carbone, préférentiellement de 4 à 8 atomes de carbone.

A titre d'exemple de copolymère (a), on peut citer les copolymères d'éthylène et d'un ester vinylique d'acide carboxylique, les copolymères d'éthylène et d'un acide carboxylique insaturé ou encore les copolymères d'éthylène et d'un acrylate et ou d'un méthacrylates d'alkyle, regroupés dans la présente demande sous le terme (méth)acrylate d'alkyle. Avantageusement, le monomère éthylénique peut être choisi parmi l'acétate de vinyle et les (méth)acrylates de méthyle, d'éthyle ou de butyle.

La quantité massique en monomère éthylénique par rapport à la masse totale du copolymère (a) peut être comprise dans la gamme allant de 1 à 70%, avantageusement de 10 à 60% et préférentiellement de 20 à 45%.

Selon l'invention, les quantités des différents monomères présents dans le copolymère (a) peuvent être mesurées par spectroscopie infrarouge en utilisant la norme ISO8985 (1998). La température de ramollissement du copolymère peut être mesurée par la Norme ASTM E 28-99(2004).

On peut utiliser les procédés dits de polymérisation radicalaire fonctionnant habituellement à des pressions entre 200 et 2 500 bars. Ces procédés sont mis en oeuvre industriellement en utilisant deux types principaux de réacteurs : un réacteur de type autoclave ou un réacteur de type tubulaire. Ces procédés de polymérisation connus de l'homme du métier et on peut utiliser par exemple les procédés décrits dans les documents FR2498609, FR2569411 et FR2569412. L'homme du métier sait dans quelles proportions utiliser chacun des monomères pour obtenir le copolymère (a) utilisé dans l'invention.

Ces copolymères sont commercialisés par la demanderesse sous la marque EVATANE® et LOTRYL®.

Le copolymère peut comprendre également des additifs ou des charges inorganiques. A titre d'exemple d'additif, on peut citer les plastifiants, les antioxydants ou agents anti-ozone, les agents antistatiques, les matériaux colorants, les pigments, les azurants optiques, les stabilisants thermiques, les stabilisants lumière, les retardateurs de flamme.

Des agents de couplage peuvent être avantageusement ajoutés afin d'améliorer le pouvoir d'adhérence sur un autre support de la composition (I) ou du polymère à réticuler. Il peut être organique, minéral et plus préférentiellement semi-minéral semi-organique. Parmi ceux-ci, on peut citer les titanates ou les silanes organiques, comme par exemple les monoalkyl titanates, les trichlorosilanes et les trialkoxysilanes.

A titre de charges inorganiques, on peut citer l'argile, la silice, le talc, les carbonates comme le carbonate de calcium (craie), les silicates comme le silicate de sodium. La composition comprend avantageusement de 0 à 10% en masse de charges, préférentiellement moins de 5%, tout préférentiellement moins de 1%.

Le copolymère (a) est sous forme de « particules », c'est-à-dire de morceaux de polymère pouvant avoir tout type de géométrie, par exemple, sphérique, sphéroïdale ou cylindrique. Le volume d'une particule est avantageusement compris dans la gamme allant de 1 à 1000 mm³, préférentiellement de 3 à 120 mm³. Dans ces gammes préférées de volume, on obtient une excellente absorption du peroxyde tout en ayant peu d'agglomération des particules. Préférentiellement, au moins 90% en masse de ces particules ont un volume compris dans ces gammes préférées de volume.

La solution (b) de peroxyde organique comprend au moins un peroxyde organique avec éventuellement un solvant organique de celui-ci.

Lorsqu'il est utilisé en absence d'un solvant organique, le peroxyde organique a une température de fusion inférieure ou égale à la température de la seconde étape d'absorption.

Par peroxyde organique, on entend toute molécule hydrocarbonée comprenant une fonction de type peroxy O-O.

Le peroxyde organique est avantageusement choisi parmi les familles des peroxyesters.

Le peroxyde organique est préférentiellement choisi parmi le 2-éthylperhexanoate de tert-butyle, peroxyde de di-t-amyle, le peroxyde de dicumyle, le peroxyde de t-butyle et de cumyle, le monoperoxycarbonate de OO-t-butyle et de O-(2-éthylhexyle), le monoperoxycarbonate de OO-t-pentyle et de O-(2-éthylhexyle), le monoperoxycarbonate de O,Otert-butyle et d'isopropyle, l'hydroperoxyde de ditertiobutyle, l'hydroperoxyde de ditertioamyle, le 2,5-Diméthyl-2,5-di(t-butylperoxy)hexane et le 2,2-Di(t-amylperoxy) propane. On peut utiliser des mélanges de ces peroxydes.

Avantageusement, la température pour une demi-vie d'une heure du peroxyde organique est inférieure ou égale à 145°C, préférentiellement de 90 à 140°C.

On peut utiliser tout type de solvant miscible avec le peroxyde. Par exemple, on utilise des solvants de type alcane, aromatique, alcène, halogéné ou alcool. Préférentiellement les molécules de solvant comprennent de 1 à 12 atomes de carbone. A titre d'exemple de solvant, on peut citer le décane, le dodécane, le 2,4,4-triméthylepentène, le α-méthylestyrène, le trichloroéthylène, le toluène, le benzène, l'éthylebenzène, le (1-méthylethenyl)benzène, 2-éthylehexanol, l'isopropanol, l'alcool de t-butyle ou l'acétone.

On peut utiliser également un mélange de solvants, par exemple un mélange des solvants listés ci-dessus.

Préférentiellement, la quantité de solvant est inférieure ou égale à 25% de la masse totale de la solution de peroxyde organique (b), voire inférieure ou égale à 10%.

Le solvant utilisé n'est préférentiellement pas un solvant du copolymère, tout particulièrement lorsque la quantité de solvant dans la solution de peroxyde est supérieure à 20% en masse. Par solvant du copolymère, on entend une concentration en polymère supérieure ou égale à 0,05g par mL de solvant lorsqu'on met en contact pendant une heure à 23°C 1 g de copolymère par mL de solvant.

Les peroxydes organiques listés ci-dessus sont commercialisés par la société Arkema sous la marque Luperox^{®}.

La composition (I) selon l'invention comprend avantageusement une quantité massique de peroxyde comprise dans la gamme allant de 5 à 30%, par exemple de 7 à 16%.

Préférentiellement, la composition est fabriquée par absorption du peroxyde (b) dans le copolymère (a). Le procédé d'absorption est réalisé aussi longtemps que nécessaire pour obtenir le taux de peroxyde (b) voulu dans la composition. Elle peut être en particulier être fabriquée par le procédé qui suit.

Un autre objet de l'invention est un procédé de fabrication d'une composition utile comme mélange-maître qui comporte les étapes suivantes :
▪ une première étape de mise en contact de la solution de peroxyde (b) avec le copolymère (a) ;
▪ une seconde étape d'absorption totale de la solution de peroxyde (b) par le copolymère (a) ;
▪ une troisième étape de récupération de la composition thermoplastique.

La première étape de mise en contact peut être réalisée dans tout type de récipient. Le récipient peut être laissé ouvert ou être clos après la mise en contact. Le récipient peut être fermé de manière étanche ou non. Préférentiellement, le récipient est fermé de manière étanche et est équipé d'une soupape.

La solution (b) de peroxyde est mise en contact avec le copolymère (a) en le versant directement sur les particules ou par un système de goutte à goutte ou encore par un système de pulvérisation tel qu'un spray.

La seconde étape est une étape d'absorption sous agitation de la solution de peroxyde (b) par le copolymère (a). Il s'agit d'une absorption totale. Par « absorption totale », on entend que le volume restant se solution (b) non absorbée dans le récipient après l'étape d'absorption est inférieur à 5%, préférentiellement inférieur à 2%, tout préférentiellement inférieur à 1%. L'étape d'absorption est réalisée à une température à laquelle la solution (b) reste liquide, c'est-à-dire à une température supérieure ou égale à la température de fusion du peroxyde lorsque celui-ci est utilisé sans solvant.

Il est cependant avantageux que la température d'absorption soit inférieure à la température de ramollissement du copolymère (a) mesurée selon la norme ASTM E 28-99(2004).

La durée de l'absorption est au moins jusqu'à l'absorption complète du peroxyde. La durée d'absorption est généralement comprise dans la gamme allant de 10 à 600 minutes, préférentiellement de 20 à 240 minutes.

L'étape d'absorption est réalisée sous agitation. Cette agitation peut être réalisée par tout système d'agitation, comme par exemple un système à pâle, à hélice, à vis ou à ultrasons ou dans un dispositif de type rotatif ou à tambour, tel qu'un sécheur.

On peut effectuer plusieurs mises en contact de solution de peroxyde (b) avec le copolymère (a), c'est-à-dire que le procédé peut comprendre au moins 2 injections de peroxyde. On peut également réaliser de manière simultanée la première et la seconde étape du procédé selon l'invention en mettant en contact de manière continue la solution de peroxyde (b) avec le copolymère (a), par exemple par un système de goutte à goutte ou encore par un système de pulvérisation tel qu'un spray.

Lors de la troisième étape du procédé, on récupère la composition thermoplastique sous forme de particules de copolymère comprenant le peroxyde.

De manière optionnelle, on peut réaliser une étape de séchage des particules récupérées lors de la troisième étape, par exemple dans une étuve ou tout autre type de sécheur. Celle-ci est réalisée à une température inférieure à la température de décomposition du peroxyde de la composition.

La composition thermoplastique peut être utilisée pour réticuler un polymère. A titre d'exemple de polymère, on peut citer les polydiènes tels que le polybutadiène. On peut également citer les polyoléfines telles que les homopolymères de l'éthylène ou du propylène, les copolymères de l'éthylène ou du propylène. Comme exemple de copolymère de l'éthylène, on peut citer les copolymères de l'éthylène et d'une α-oléfine telle que le propylène, le 1-butène, le 1-héxène ou le 1-octène. On peut également citer comme polymère à réticuler les copolymères (a) d'éthylène et d'un monomère éthylénique portant une fonction polaire décrits ci-dessus.

Selon un mode de réalisation, le copolymère (a) est un copolymère d'éthylène et d'acétate de vinyle et le polymère à réticuler est un copolymère d'éthylène et d'acétate de vinyle.

Pour réticuler le polymère, on le mélange généralement dans une première étape avec la composition thermoplastique comprenant (a) et (b), une seconde étape de mise en forme du polymère puis on réticule le polymère dans une troisième étape.

Lors de la première étape, on utilise les techniques classiques de mélange, en particulier dans les outils de mise en oeuvre des thermoplastiques, tels que les extrudeuses ou les mélangeurs. On peut mélanger à une température inférieure à la température de dégradation du peroxyde (b).

On réalise la seconde étape de mise en forme à une température inférieure à la température de dégradation du peroxyde (b). On peut utiliser tout type d'appareillage permettant la mise en forme tels que les presses, les injecteurs ou les calandreurs. On peut également réaliser la mise en forme simultanément avec la première étape, par exemple par extrusion de film en plaçant une filière plate en bout de l'extrudeuse.

La troisième étape est généralement réalisée à une température supérieure à la température de dégradation du peroxyde.

La composition thermoplastique (I) est avantageusement utilisée pour réticuler des polymères pour la fabrication de pièces ou de films transparents.

Selon l'invention, une pièce ou un film est transparent lorsqu'elle présente un niveau de trouble (en anglais « Haze ») inférieur ou égal à 20%, par exemple inférieur ou égal à 10%. Le niveau de trouble du film est évalué selon la norme ASTM D1003, sur un film de 500 µm d'épaisseur de la composition qui constitue la pièce ou le film, et pour au moins une longueur d'onde du domaine visible (de 380 à 780 nm), par exemple 500 nm.

L'invention est maintenant illustrée à titre non limitatif par les exemples suivants.

### Exemples

### Produits utilisés :

EVA 1 : copolymère d'éthylène et d'acétate de vinyle comprenant 33% en masse d'acétate de vinyle. L'indice de fluidité est de 45 g/10min (190°C, 2,16kg, ASTM D 1238). La masse moléculaire moyenne en poids (M_{w}) est de 62000 g/mol.
EVA 2 : copolymère d'éthylène et d'acétate de vinyle comprenant 28% en masse d'acétate de vinyle. L'indice de fluidité est de 5 g/10min (190°C, 2,16kg, ASTM D 1238). M_{w} est de 87000 g/mol.
EVA 3 : copolymère d'éthylène et d'acétate de vinyle comprenant 28% en masse d'acétate de vinyle. L'indice de fluidité est de 25 g/10min (190°C, 2,16kg, ASTM D 1238). M_{w} est de 61500 g/mol.
EVA 4 : copolymère d'éthylène et d'acétate de vinyle comprenant 28% en masse d'acétate de vinyle. L'indice de fluidité est de 150 g/10min (190°C, 2,16kg, ASTM D 1238). M_{w} est de 41000 g/mol.
EVA 5 : copolymère d'éthylène et d'acétate de vinyle comprenant 28% en masse d'acétate de vinyle. L'indice de fluidité est de 800 g/10min (190°C, 2,16kg, ASTM D 1238). M_{w} est de 30300 g/mol.
EVA 6: copolymère d'éthylène et d'acétate de vinyle comprenant 18% en masse d'acétate de vinyle. L'indice de fluidité est de 2 g/10min (190°C, 2,16kg, ASTM D 1238.

On réalise un premier essai en utilisant une solution de Luperox^{®} TCS et un second essai en utilisant une solution de Luperox^{®} TBEC comme solution de peroxyde organique.

### Absorption du peroxyde par le copolymère

On réalise une absorption sur les particules de copolymère EVA1 pour chacune des solutions de peroxyde.

On met en contact la solution de peroxyde organique (2,2kg) avec le copolymère (19,8kg) dans un récipient clos à 20°C, l'axe de rotation du cylindre étant horizontal, et agité par rotation du récipient à une vitesse de 3 tours par minute.

Une première moitié de la solution de peroxyde est injectée au début de l'absorption et une seconde moitié est ajoutée au bout de 30 minutes d'absorption.

Pour la solution de Luperox^{®} TCS, on récupère les particules de polymère au bout des 180 minutes. L'absorption de la solution de peroxyde dans les particules est totale.

Pour la solution de Luperox^{®} TBEC, on récupère les particules de polymère au bout des 120 minutes. L'absorption de la solution de peroxyde dans les particules est totale.

Les particules ont été dosées après lavage pendant une heure dans le n-heptane : la quantité de peroxyde dans le copolymère est de 10% en masse totale de la composition.

### Effet du taux de monomère éthylénique dans le copolymère (a) sur sa cinétique d'absorption du peroxyde (b)

On reprend le dispositif utilisé précédemment en mettant en contact le Luperox^{®} TBEC avec le copolymère (8% en masse de peroxyde), et on mesure le temps nécessaire à l'absorption du peroxyde. Le temps nécessaire à l'absorption totale du peroxyde dans le copolymère éthylène-acétate de vinyle est présenté dans le Tableau 1.

### Caractéristiques du mélange-maître : Transparence

Des films de 500µm des différents mélanges-maîtres sont préparés par pressage à basse température (85°C). La transparence de ces différents films est évaluée à l'oeil nu (une composition très transparente est évaluée « + », une composition trouble est évaluée « - ») et reportée dans le Tableau 1.

| EVA | 2 | 3 | 4 | 5 | 6 |
|---|---|---|---|---|---|
| Cinétique (min) | 285 | 180 | 90 | 45 | >360 |
| Transparence | + | + | + | + | - |

On remarque que la cinétique d'absorption du peroxyde augmente avec le taux d'acétate de vinyle. On remarque également que la vitesse d'absorption augmente lorsque la masse moléculaire en poids du copolymère diminue.

De manière surprenante, les compositions de mélange-maître selon l'invention peuvent être fabriqués aisément, même par simple absorption du peroxyde dans le copolymère.

Par ailleurs, les mélanges-maîtres selon l'invention sont particulièrement transparents.

## Revendications

1. Procédé de fabrication d'une composition thermoplastique (I) comprenant :
▪ un copolymère (a) d'éthylène et d'un monomère éthylénique portant une fonction polaire sous forme de particules ;
▪ et au moins une solution (b) de peroxyde organique, avec éventuellement un solvant organique de celui-ci, ledit peroxyde étant choisi parmi la famille des peroxyesters, qui est absorbé par ledit copolymère ;
**caractérisé en ce qu'**il comprend :
▪ une première étape de mise en contact du peroxyde (b) avec le copolymère (a) ;
▪ une seconde étape d'absorption totale de la solution de peroxyde (b) par le copolymère (a) sous agitation ;
▪ une troisième étape de récupération de la composition thermoplastique (I).

2. Procédé selon la revendication 1, **caractérisé en ce que** la température de la seconde étape est inférieure à la température de ramollissement du copolymère mesurée selon la norme ASTM E 28-99(2004).

3. Procédé selon l'une des revendications précédentes, **caractérisé en ce que** le copolymère sous forme de particules a un volume de 1 à 1000 mm³, préférentiellement de 3 à 120 mm³.

4. Procédé selon l'une des revendications précédentes, **caractérisé en ce que** le copolymère comprend de 10 à 60% en masse de monomère éthylénique portant une fonction polaire par rapport à la masse totale du copolymère.

5. Procédé selon l'une des revendications précédentes, **caractérisé en ce que** le monomère éthylénique portant une fonction polaire est choisi parmi les esters vinyliques d'acide carboxylique saturé, les acides carboxyliques insaturés ou les esters (méth)acryliques d'acide carboxylique insaturé.

6. Procédé selon l'une des revendications précédentes, **caractérisé en ce que** le monomère éthylénique a un nombre d'atomes de carbone compris de 3 à 20, préférentiellement de 4 à 8.

7. Procédé selon l'une des revendications précédentes, **caractérisé en ce que** le monomère éthylénique est choisi parmi l'acétate de vinyle et les (méth)acrylates de méthyle, d'éthyle ou de butyle.

8. Procédé selon l'une des revendications précédentes, **caractérisé en ce que** la quantité massique de solution de peroxyde (b) dans la composition (I) est comprise dans la gamme allant de 5 à 30%.

9. Procédé selon l'une des revendications précédentes, **caractérisé en ce que** la quantité massique de solution de peroxyde (b) dans la composition (I) est comprise dans la gamme allant de 7 à 16%.

10. Procédé selon l'une des revendications précédentes, **caractérisé en ce qu'**il existe plusieurs mises en contact ou une mise en contact continue de la solution de peroxyde (b) avec le copolymère (a).

11. Composition (I) transparente obtenue par un procédé selon l'une des revendications précédentes, comprenant un copolymère d'éthylène et d'un monomère éthylénique portant une fonction polaire (a) et un peroxyde (b) choisi parmi la famille des peroxyesters, **caractérisée en ce que** ladite composition comprend en masse :
- de 5% à 30% de (b) ;
- de 70% à 95% de (a) ;
et **en ce que** le copolymère (a) comprend de 20% à 45% en masse de monomère éthylénique portant une fonction polaire.

12. Composition selon la revendication 11, **caractérisée en ce qu'**elle comprend de 7 à 16% de peroxyde (b) et de 84 à 93% de copolymère (a).

13. Utilisation d'une composition (I) selon la revendication 11 ou 12 pour la réticulation d'un polymère.

## Patentansprüche

1. Verfahren zur Herstellung einer thermoplastischen Zusammensetzung (I), umfassend:
▪ ein Copolymer (a) von Ethylen und einem ethylenischen Monomer mit einer polaren Funktion in Form von Teilchen;
▪ und mindestens eine durch das Copolymer absorbierte Lösung (b) von organischem Peroxid, gegebenenfalls mit einem organischen Lösungsmittel dafür, wobei das Peroxid aus der Familie der Peroxyester ausgewählt ist;
**dadurch gekennzeichnet, dass** es Folgendes umfasst:
▪ einen ersten Schritt des Inberührungbringens des Peroxids (b) mit dem Copolymer (a);
▪ einen zweiten Schritt der vollständigen Absorption der Peroxidlösung (b) durch das Copolymer (a) unter Rühren;
▪ einen dritten Schritt der Gewinnung der thermoplastischen Zusammensetzung (I).

2. Verfahren nach Anspruch 1, **dadurch gekennzeichnet, dass** die Temperatur des zweiten Schritts unter der gemäß der ASTM-Norm E 28-99 (2004) gemessenen Erweichungstemperatur des Copolymers liegt.

3. Verfahren nach einem der vorhergehenden Ansprüche, **dadurch gekennzeichnet, dass** das Copolymer in Form von Teilchen ein Volumen von 1 bis 1000 mm³, vorzugsweise 3 bis 120 mm³, aufweist.

4. Verfahren nach einem der vorhergehenden Ansprüche, **dadurch gekennzeichnet, dass** das Copolymer 10 bis 60 Gew.-% ethylenisches Monomer mit einer polaren Funktion, bezogen auf das Gesamtgewicht des Copolymers, umfasst.

5. Verfahren nach einem der vorhergehenden Ansprüche, **dadurch gekennzeichnet, dass** das ethylenische Monomer mit einer polaren Funktion aus Vinylestern gesättigter Carbonsäuren, ungesättigten Carbonsäuren oder (Meth)Acrylsäureestern ungesättigter Carbonsäuren ausgewählt ist.

6. Verfahren nach einem der vorhergehenden Ansprüche, **dadurch gekennzeichnet, dass** das ethylenische Monomer eine Zahl von Kohlenstoffatomen von 3 bis 20 und vorzugsweise 4 bis 8 aufweist.

7. Verfahren nach einem der vorhergehenden Ansprüche, **dadurch gekennzeichnet, dass** das ethylenische Monomer aus Vinylacetat und Methyl-, Ethyl- oder Butyl(meth)acrylat ausgewählt ist.

8. Verfahren nach einem der vorhergehenden Ansprüche, **dadurch gekennzeichnet, dass** die Gewichtsmenge von Peroxidlösung (b) in der Zusammensetzung (I) im Bereich von 5 bis 30% liegt.

9. Verfahren nach einem der vorhergehenden Ansprüche, **dadurch gekennzeichnet, dass** die Gewichtsmenge von Peroxidlösung (b) in der Zusammensetzung (I) im Bereich von 7 bis 16% liegt.

10. Verfahren nach einem der vorhergehenden Ansprüche, **dadurch gekennzeichnet, dass** die Peroxidlösung (b) mehrmals oder kontinuierlich mit dem Copolymer (a) in Berührung gebracht wird.

11. Transparente Zusammensetzung (I), erhalten durch ein Verfahren nach einem der vorhergehenden Ansprüche, umfassend ein Copolymer von Ethylen und einem ethylenischen Monomer mit einer polaren Funktion (a) und ein Peroxid (b), das aus der Familie der Peroxyester ausgewählt ist, **dadurch gekennzeichnet, dass** die Zusammensetzung, bezogen auf das Gewicht:
- 5% bis 30% (b);
- 70% bis 95% (a)
umfasst und dass das Copolymer (a) 20 bis 45 Gew.-% ethylenisches Monomer mit einer polaren Funktion umfasst.

12. Zusammensetzung nach Anspruch 11, **dadurch gekennzeichnet, dass** sie 7 bis 16% Peroxid (b) und 84 bis 93% Copolymer (a) umfasst.

13. Verwendung einer Zusammensetzung (I) nach Anspruch 11 oder 12 zur Vernetzung eines Polymers.

## Claims

1. Process for the manufacture of a thermoplastic composition of use as masterbatch, comprising:
■ a copolymer (a) of ethylene and of an ethylenic monomer carrying a polar functional group in the form of particles;
■ and at least one solution of organic peroxide (b), optionally with an organic solvent thereof, said peroxide being chosen from peroxyester family which is absorbed by said copolymer;
**characterized in that** the process comprises:
■ a first stage in which the solution of peroxide (b) is brought into contact with the copolymer (a) ;
■ a second stage of complete absorption of the solution of peroxide (b) by the copolymer (a) with stirring;
■ a third stage of recovery of the thermoplastic composition (I).

2. The process as claimed in claim 1, **characterized in that** the temperature of the second stage is below the softening temperature of the copolymer measured according to the standard ASTM E 28-99 (2004).

3. The process as claimed in either of the preceding claims, **characterized in that** the copolymer in the form of particles has a volume of 1 to 1000 mm³, preferably of 3 to 120 mm³.

4. The process as claimed in either of the preceding claims, **characterized in that** the copolymer comprises from 10 to 60% by weight of ethylenic monomer carrying a polar functional group, with respect to the total weight of the copolymer.

5. The process as claimed in either of the preceding claims, **characterized in that** the ethylenic monomer carrying a polar functional group is chosen from saturated carboxylic acid vinyl esters, unsaturated carboxylic acids or unsaturated carboxylic acid (meth)acrylic esters.

6. The process as claimed in either of the preceding claims, **characterized in that** the ethylenic monomer has a number of carbon atoms of from 3 to 20, preferably from 4 to 8.

7. The process as claimed in either of the preceding claims, **characterized in that** the ethylenic monomer is chosen from vinyl acetate and methyl, ethyl or butyl (meth)acrylates.

8. The process as claimed in either of the preceding claims, **characterized in that** the amount by weight of solution of peroxide (b) in the composition is within the range extending from 5 to 30%.

9. The process as claimed in either of the preceding claims, **characterized in that** the amount by weight of solution of peroxide (b) in the composition is within the range extending from 7 to 16%.

10. The process as claimed in either of the preceding claims, **characterized in that** the solution of peroxide (b) is brought into contact with the copolymer (a) on several occasions or continuously.

11. Transparent composition (I), of use as masterbatch, comprising a copolymer of ethylene and of an ethylenic monomer carrying a polar functional group (a) and a peroxide (b) chosen from peroxyester family, **characterized in that** said composition comprises, by weight:
▪ from 5 to 30% of (b);
▪ from 70 to 95% of (a);
and **in that** the copolymer (a) comprises from 20 to 45% by weight of ethylenic monomer carrying a polar functional group.

12. Composition as claimed in claim 11, **characterized in that** it comprises from 7 to 16% of peroxide (b) and from 84 to 93% of copolymer (a).

13. The use of a composition (I) as claimed in one of the claim 11 or 12 for the crosslinking of a polymer.
